# EUROPEAN PATENT SPECIFICATION

(11) **EP 4 196 861 B1**
(45) Date of publication and mention of the grant of the patent: **02.12.2026**
(21) Application number: 21786305.9
(22) Date of filing: 09.09.2021
(51) Int. Cl.: G05D 1/00

(54) **ROBOT NAVIGATION MANAGEMENT BETWEEN ZONES IN AN ENVIRONMENT**
ROBOTERNAVIGATIONSVERWALTUNG ZWISCHEN ZONEN IN EINER UMGEBUNG
GESTION DE NAVIGATION DE ROBOTS ENTRE ZONES D'UN ENVIRONNEMENT

(30) Priority: 11.09.2020 US 202017017801
(43) Date of publication of application: 21.06.2023
(73) Proprietor: Locus Robotics Corp., Wilmington, MA 01887 (US)
(72) Inventor: JAQUEZ, Luis, Burlington, Massachusetts 01803 (US); JOHNSON, Sean, Danvers, Massachusetts 01923 (US); JOHNSON, Michael Charles, Ashland, Massachusetts 01721 (US); ALCUTT, Andrew, Andover, Massachusetts 01810 (US)
(74) Representative: Froud, Christopher Andrew
(86) International application number: PCT/US2021/049553
(87) International publication number: WO 2022/056056

(56) References cited:
- EP-A2- 2 078 996
- CN-A- 109 316 134
- CN-B- 107 981 790

## Description

### CROSS-REFERENCE TO RELATED APPLICATION

This application claims the benefit of priority to U.S. Application No. 17/017,801, filed September 11, 2020.

### Technical Field

This invention relates to robot navigation and more particularly to robot navigation management within an environment having a plurality of different areas or zones.

### Background Art

Ordering products over the internet for home delivery is an extremely popular way of shopping. Fulfilling such orders in a timely, accurate and efficient manner is logistically challenging to say the least. Clicking the "check out" button in a virtual shopping cart creates an "order." The order includes a listing of items that are to be shipped to a particular address. The process of "fulfillment" involves physically taking or "picking" these items from a large warehouse, packing them, and shipping them to the designated address. An important goal of the order-fulfillment process is thus to ship as many items in as short a time as possible.

The order-fulfillment process typically takes place in a large warehouse that contains many products, including those listed in the order. Among the tasks of order fulfillment is therefore that of traversing the warehouse to find and collect the various items listed in an order. In addition, the products that will ultimately be shipped first need to be received in the warehouse and stored or "placed" in storage bins in an orderly fashion throughout the warehouse so they can be readily retrieved for shipping.

In a large warehouse, the goods that are being delivered and ordered can be stored in the warehouse very far apart from each other and dispersed among a great number of other goods. With an order-fulfillment process using only human operators to place and pick the goods requires the operators to do a great deal of walking and can be inefficient and time consuming. Since the efficiency of the fulfillment process is a function of the number of items shipped per unit time, increasing time reduces efficiency.

In order to increase efficiency, robots may be used to perform functions of humans or they may be used to supplement the humans' activities. For example, robots may be assigned to "place" a number of items in various locations dispersed throughout the warehouse or to "pick" items from various locations for packing and shipping. The picking and placing may be done by the robot alone or with the assistance of human operators. For example, in the case of a pick operation, the human operator would pick items from shelves and place them on the robots or, in the case of a place operation, the human operator would pick items from the robot and place them on the shelves.

Some warehouses or other environments are be divided into a variety of different areas. For example, some products may require temperature control and are therefore located in a temperature-controlled area, such as a freezer. Some products may require higher security and are therefore placed in an area separated from other products by a barrier. Some environments have areas located at different elevations, which may be accessed via a sloped floor or an elevator. Some different areas are separated by physical barriers such as walls, while other different areas may have no physical barrier separating them. Navigating between such areas can lead to inefficient routing or to traffic congestion between a plurality of robots or between robots and human operators.
EP2078996A2 discloses an apparatus including a coarse map creating unit creating a coarse map which includes path information of the mobile robot; and a virtual door extracting unit extracting virtual doors which divide the coarse map into a plurality of sub regions, where the mobile robot sequentially cleans the sub regions one by one. The method includes creating a coarse map which includes path information of the mobile robot; extracting virtual doors which divide the coarse map into a plurality of sub regions; and sequentially cleaning the sub regions one by one.
CN109316134B aims to provide a cleaning method of a sweeping machine and the sweeping machine. The cleaning method considers the environment where the sweeping machine is located to partition a to-be-cleaned area, introduces virtual doors to isolate partitions, and takes whether or not an un-cleaned partition exists at the two sides of the virtual doors as a search medium for a new to-be-cleaned partition.

### Summary of the Embodiments

Provided herein are methods and systems for robot navigation management in an environment or navigational space having a plurality of zones.

In one aspect, a method for navigating an autonomous robot from a first zone to a second, adjacent zone within an environment is provided by claim 1. The step of traversing through the waypoint can include traversing the waypoint without pausing at the waypoint or pausing at the waypoint before crossing the threshold. The waypoint can be spaced a distance from the threshold or located on the border along the threshold.

In some embodiments, the method further comprises defining, by the server, a second waypoint associated with the threshold, the waypoint and the second waypoint located on opposite sides of the threshold. In some embodiments, the border between the two adjacent zones is a physical barrier and the threshold is located at an opening in the physical barrier. In some embodiments, the border between the two adjacent zones is a virtual barrier, and the threshold is a defined location along the virtual barrier. In some embodiments, the method further comprises defining, by the server, a second threshold along the border between the adjacent zones, a second waypoint associated with the second threshold. In some embodiments, the method further comprises defining, by the server, the threshold to permit robot traffic in a first direction, and defining a second threshold along the border between the adjacent zones to permit robot traffic in an opposite direction from the first direction.

In some embodiments, the method further comprises joining, by the robot, a queue of robots waiting to pass threshold. In some embodiments, the method further comprises detecting, by the robot, an obstruction in the threshold with a camera, a laser detector, or a radar detector, or a combination thereof. In some embodiments, each of the zones is a secured area, a temperature controlled area, a warehouse area, or an area having a different elevation from an adjacent area, or a combination thereof.

In a further aspect, a system for navigating an autonomous robot from a first zone to a second, adjacent zone within an environment is provided by claim 8. In some embodiments, the memory further stores instructions that, when executed by the processor, cause the robot to traverse waypoint without pausing at the waypoint, or to pause at the waypoint before crossing the threshold. In some embodiments, the waypoint is spaced a distance from the threshold or located on the border along the threshold. In some embodiments, the server is configured to define a second waypoint and a second orientation associated with the second waypoint, associated with the threshold, the waypoint and the second waypoint located on opposite sides of the threshold.

In some embodiments, the border between the two adjacent zones is a physical barrier and the threshold is located at an opening in the physical barrier. In some embodiments, the border between the two adjacent zones is a virtual barrier, and the threshold is a defined location along the virtual barrier. In some embodiments, the server is configured to define a second threshold along the border between the two adjacent zones, and a second waypoint associated with the second threshold. In some embodiments, the robot navigation server is configured to define the threshold to permit robot traffic in a first direction, and to define a second threshold along the border between the first zone and the second zone to permit robot traffic in an opposite direction from the first direction.

In some embodiments, the memory further stores instructions that, when executed by the processor, cause the autonomous robot to join a queue of robots waiting to pass the threshold. In some embodiments, the memory further stores instructions that, when executed by the processor, cause the autonomous robot to detect an obstruction in the threshold with a camera, a laser detector, or a radar detector, or a combination thereof.

In some embodiments, each of the zones is a secured area, a temperature controlled area, a warehouse area, or an area having a different elevation from an adjacent area, or a combination thereof. In some embodiments, the server further comprises one or more of a warehouse management system, an order-server, a standalone server, a distributed system comprising the memory of at least two of the plurality of robots, or combinations thereof.

These and other features of the invention will be apparent from the following detailed description and the accompanying figures, in which:

### Brief Description of the Drawings

FIG. 1 is a top plan view of an order-fulfillment warehouse;
FIG. 2A is a front elevational view of a base of one of the robots used in the warehouse shown in FIG. 1;
FIG. 2B is a perspective view of a base of one of the robots used in the warehouse shown in FIG. 1;
FIG. 3 is a perspective view of the robot in FIGS. 2A and 2B outfitted with an armature and parked in front of a shelf shown in FIG. 1;
FIG. 4 is a partial map of the warehouse of FIG. 1 created using laser radar on the robot;
FIG. 5 is a flow chart depicting the process for locating fiducial markers dispersed throughout the warehouse and storing fiducial marker poses;
FIG. 6 is a table of the fiducial identification to pose mapping;
FIG. 7 is a table of the bin location to fiducial identification mapping;
FIG. 8 is a flow chart depicting product SKU to pose mapping process;
FIG. 9 is a block diagram of an embodiment of a robot system for use with the method and system of the present invention;
FIG. 10 is a map of an environment divided into a plurality of zones;
FIG. 11 is a block diagram of an exemplary computing system; and

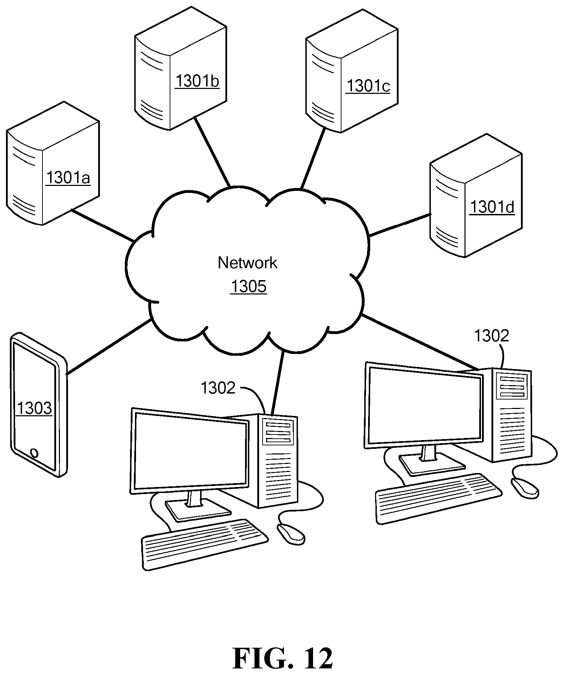

FIG. 12 is a network diagram of an exemplary distributed network.

### Detailed Description of Specific Embodiments

The disclosure and the various features and advantageous details thereof are explained more fully with reference to the non-limiting embodiments and examples that are described and/or illustrated in the accompanying drawings and detailed in the following description. It should be noted that the features illustrated in the drawings are not necessarily drawn to scale, and features of one embodiment may be employed with other embodiments as the skilled artisan would recognize, even if not explicitly stated herein. Descriptions of well-known components and processing techniques may be omitted so as to not unnecessarily obscure the embodiments of the disclosure. The examples used herein are intended merely to facilitate an understanding of ways in which the disclosure may be practiced and to further enable those of skill in the art to practice the embodiments of the disclosure. Accordingly, the examples and embodiments herein should not be construed as limiting the scope of the disclosure. Moreover, it is noted that like reference numerals represent similar parts throughout the several views of the drawings.

The invention is directed to robot navigation management. Although not restricted to any particular robot application, one suitable application that the invention may be used in is order fulfillment. The use of robots in this application will be described to provide context for robot navigation management but is not limited to that application.

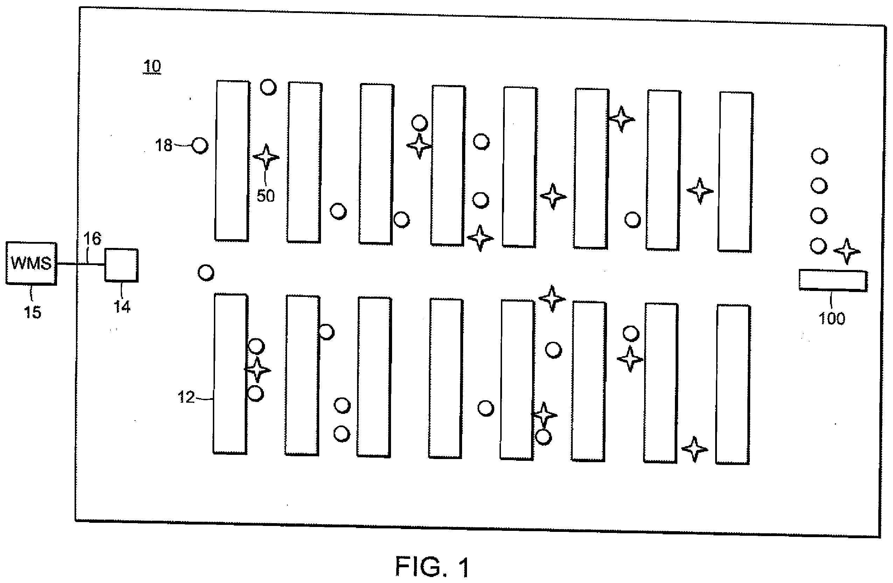

Referring to FIG. 1, a typical order-fulfillment warehouse 10 includes shelves 12 filled with the various items that could be included in an order. In operation, an incoming stream of orders 16 from warehouse management server 15 arrive at an order-server 14. The order-server 14 may prioritize and group orders, among other things, for assignment to robots 18 during an induction process. As the robots are inducted by operators, at a processing station (e.g. station 100), the orders 16 are assigned and communicated to robots 18 wirelessly for execution. It will be understood by those skilled in the art that order server 14 may be a separate server with a discrete software system configured to interoperate with the warehouse management system server 15 and warehouse management software or the order server functionality may be integrated into the warehouse management software and run on the warehouse management server 15.

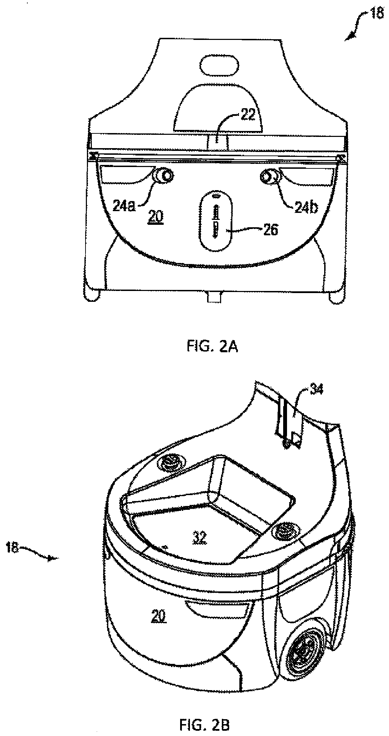

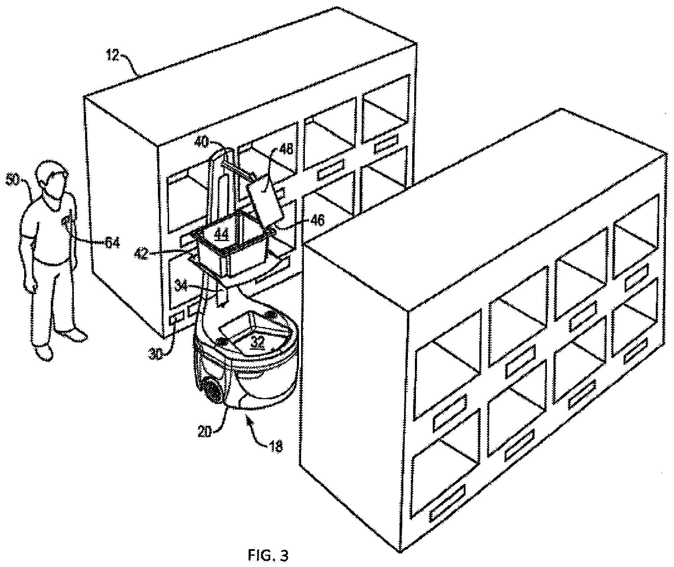

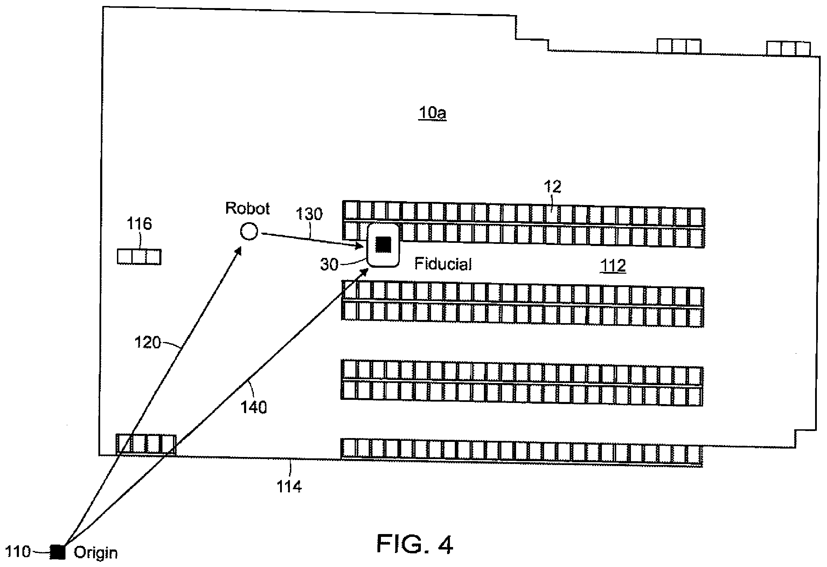

In a preferred embodiment, a robot 18, shown in FIGS. 2A and 2B, includes an autonomous wheeled base 20 having a laser-radar 22. The base 20 also features a transceiver (not shown) that enables the robot 18 to receive instructions from and transmit data to the order-server 14 and/or other robots, and a pair of digital optical cameras 24a and 24b. The robot base also includes an electrical charging port 26 for re-charging the batteries which power autonomous wheeled base 20. The base 20 further features a processor (not shown) that receives data from the laser-radar and cameras 24a and 24b to capture information representative of the robot's environment. There is a memory (not shown) that operates with the processor to carry out various tasks associated with navigation within the warehouse 10, as well as to navigate to fiducial marker 30 placed on shelves 12, as shown in FIG. 3. Fiducial marker 30 (e.g. a two-dimensional bar code) corresponds to bin/location of an item ordered. The navigation approach of this invention is described in detail below with respect to FIGS. 4-8. Fiducial markers are also used to identify charging stations according to an aspect of this invention and the navigation to such charging station fiducial markers is the same as the navigation to the bin/location of items ordered. Once the robots navigate to a charging station, a more precise navigation approach is used to dock the robot with the charging station and such a navigation approach is described below.

Referring again to FIG. 2B, base 20 includes an upper surface 32 where a tote or bin could be stored to carry items. There is also shown a coupling 34 that engages any one of a plurality of interchangeable armatures 40, one of which is shown in FIG. 3. The particular armature 40 in FIG. 3 features a tote-holder 42 (in this case a shelf) for carrying a tote 44 that receives items, and a tablet holder 46 (or laptop/other user input device) for supporting a tablet 48. In some embodiments, the armature 40 supports one or more totes for carrying items. In other embodiments, the base 20 supports one or more totes for carrying received items. As used herein, the term "tote" includes, without limitation, cargo holders, bins, cages, shelves, rods from which items can be hung, caddies, crates, racks, stands, trestle, containers, boxes, canisters, vessels, and repositories.

Although a robot 18 excels at moving around the warehouse 10, with current robot technology, it is not very good at quickly and efficiently picking items from a shelf and placing them in the tote 44 due to the technical difficulties associated with robotic manipulation of objects. A more efficient way of picking items is to use a local operator 50, which is typically human, to carry out the task of physically removing an ordered item from a shelf 12 and placing it on robot 18, for example, in tote 44. The robot 18 communicates the order to the local operator 50 via the tablet 48 (or laptop/other user input device), which the local operator 50 can read, or by transmitting the order to a handheld device used by the local operator 50.

Upon receiving an order 16 from the order server 14, the robot 18 proceeds to a first warehouse location, e.g. as shown in FIG. 3. It does so based on navigation software stored in the memory and carried out by the processor. The navigation software relies on data concerning the environment, as collected by the laser-radar 22, an internal table in memory that identifies the fiducial identification ("ID") of fiducial marker 30 that corresponds to a location in the warehouse 10 where a particular item can be found, and the cameras 24a and 24b to navigate.

Upon reaching the correct location (pose), the robot 18 parks itself in front of a shelf 12 on which the item is stored and waits for a local operator 50 to retrieve the item from the shelf 12 and place it in tote 44. If robot 18 has other items to retrieve it proceeds to those locations. The item(s) retrieved by robot 18 are then delivered to a processing station 100, FIG. 1, where they are packed and shipped. While processing station 100 has been described with regard to this figure as being capable of inducting and unloading/packing robots, it may be configured such that robots are either inducted or unloaded/packed at a station, i.e. they may be restricted to performing a single function.

It will be understood by those skilled in the art that each robot may be fulfilling one or more orders and each order may consist of one or more items. Typically, some form of route optimization software would be included to increase efficiency, but this is beyond the scope of this invention and is therefore not described herein.

In order to simplify the description of the invention, a single robot 18 and operator 50 are described. However, as is evident from FIG. 1, a typical fulfillment operation includes many robots and operators working among each other in the warehouse to fill a continuous stream of orders.

The baseline navigation approach of this invention, as well as the semantic mapping of a SKU of an item to be retrieved to a fiducial ID/pose associated with a fiducial marker in the warehouse where the item is located, is described in detail below with respect to Figs. 4-8.

Using one or more robots 18, a map of the warehouse 10 must be created and the location of various fiducial markers dispersed throughout the warehouse must be determined. To do this, one or more of the robots 18 as they are navigating the warehouse they are building/updating a map 10a, FIG. 4, utilizing its laser-radar 22 and simultaneous localization and mapping (SLAM), which is a computational problem of constructing or updating a map of an unknown environment. Popular SLAM approximate solution methods include the particle filter and extended Kalman filter. The SLAM GMapping approach is the preferred approach, but any suitable SLAM approach can be used.

Robot 18 utilizes its laser-radar 22 to create map 10a of warehouse 10 as robot 18 travels throughout the space identifying open space 112, walls 114, objects 116, and other static obstacles, such as shelf 12, in the space, based on the reflections it receives as the laser-radar scans the environment.

While constructing the map 10a (or updating it thereafter), one or more robots 18 navigates through warehouse 10 using camera 26 to scan the environment to locate fiducial markers (two-dimensional bar codes) dispersed throughout the warehouse on shelves proximate bins, such as 32 and 34, FIG. 3, in which items are stored. Robots 18 use a known starting point or origin for reference, such as origin 110. When a fiducial marker, such as fiducial marker 30, FIGS. 3 and 4, is located by robot 18 using its camera 26, the location in the warehouse relative to origin 110 is determined.

By the use of wheel encoders and heading sensors, vector 120, and the robot's position in the warehouse 10 can be determined. Using the captured image of a fiducial marker/two-dimensional barcode and its known size, robot 18 can determine the orientation with respect to and distance from the robot of the fiducial marker/two-dimensional barcode, vector 130. With vectors 120 and 130 known, vector 140, between origin 110 and fiducial marker 30, can be determined. From vector 140 and the determined orientation of the fiducial marker/two-dimensional barcode relative to robot 18, the pose (position and orientation) defined by a quaternion (x, y, z, ω) for fiducial marker 30 can be determined.

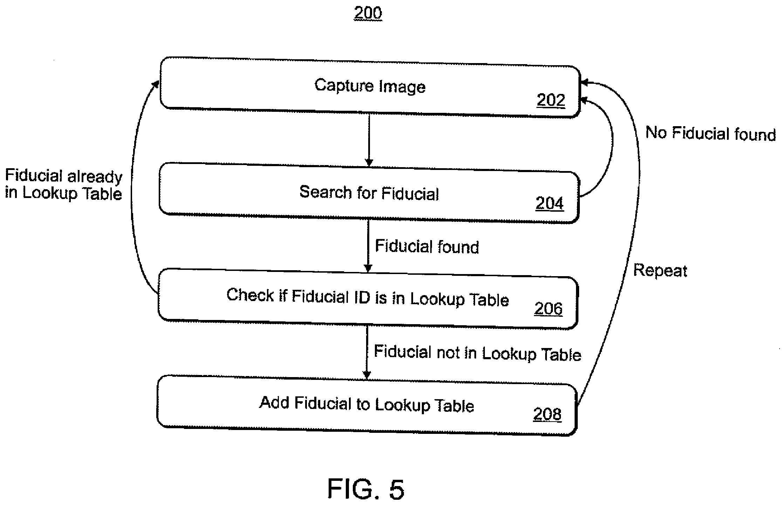

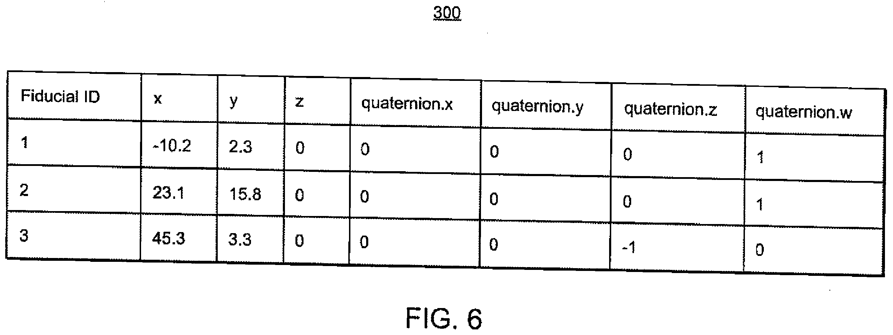

Flow chart 200, Fig. 5, describing the fiducial marker location process is described. This is performed in an initial mapping mode and as robot 18 encounters new fiducial markers in the warehouse while performing picking, placing and/or other tasks. In step 202, robot 18 using camera 26 captures an image and in step 204 searches for fiducial markers within the captured images. In step 206, if a fiducial marker is found in the image (step 204) it is determined if the fiducial marker is already stored in fiducial table 300, Fig. 6, which is located in memory 34 of robot 18. If the fiducial information is stored in memory already, the flow chart returns to step 202 to capture another image. If it is not in memory, the pose is determined according to the process described above and in step 208, it is added to fiducial to pose lookup table 300.

In look-up table 300, which may be stored in the memory of each robot, there are included for each fiducial marker a fiducial identification, 1, 2, 3, etc., and a pose for the fiducial marker/bar code associated with each fiducial identification. The pose consists of the x,y,z coordinates in the warehouse along with the orientation or the quaternion (x,y,z, ω).

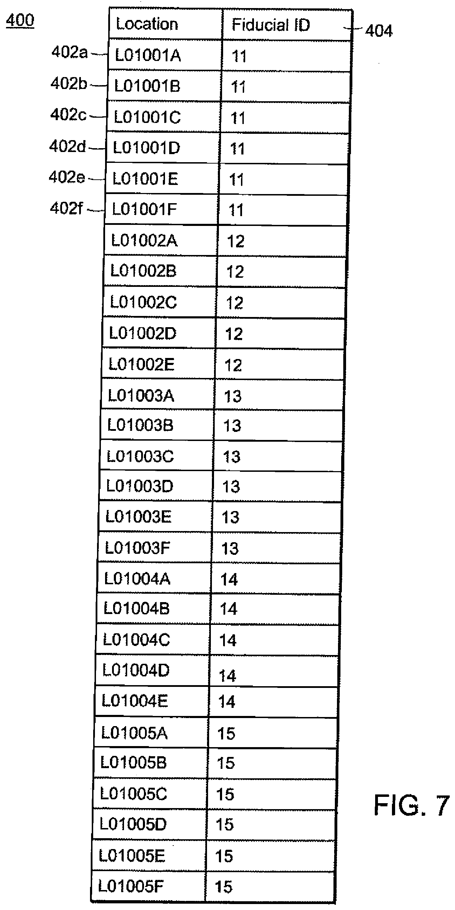

In another look-up Table 400, Fig. 7, which may also be stored in the memory of each robot, is a listing of bin locations (e.g. 402a-f) within warehouse 10, which are correlated to particular fiducial ID's 404, e.g. number "11". The bin locations, in this example, consist of seven alpha-numeric characters. The first six characters (e.g. L01001) pertain to the shelf location within the warehouse and the last character (e.g. A-F) identifies the particular bin at the shelf location. In this example, there are six different bin locations associated with fiducial ID "11". There may be one or more bins associated with each fiducial ID/marker.

The alpha-numeric bin locations are understandable to humans, e.g. operator 50, Fig. 3, as corresponding to a physical location in the warehouse 10 where items are stored. However, they do not have meaning to robot 18. By mapping the locations to fiducial ID's, Robot 18 can determine the pose of the fiducial ID using the information in table 300, Fig. 6, and then navigate to the pose, as described herein.

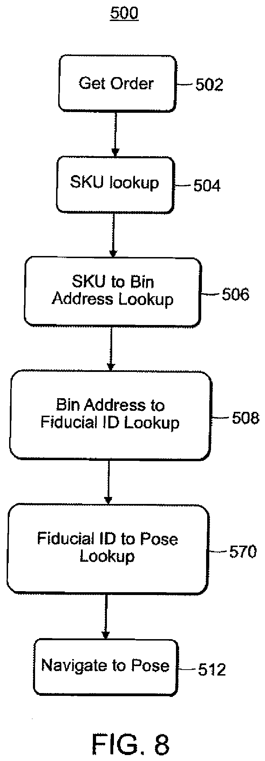

The order fulfillment process according to this invention is depicted in flow chart 500, Fig. 8. In step 502, from warehouse management system 15, order server 14 obtains an order, which may consist of one or more items to be retrieved. It should be noted that the order assignment process is fairly complex and goes beyond the scope of this disclosure. One such order assignment process is described in commonly owned U.S. Patent Application Serial No. 15/807,672, entitled Order Grouping in Warehouse Order Fulfillment Operations, filed on September 1, 2016, which is incorporated herein by reference in its entirety. It should also be noted that robots may have tote arrays which allow a single robot to execute multiple orders, one per bin or compartment. Examples of such tote arrays are described in U.S. Patent Application Serial No. 15/254,321, entitled Item Storage Array for Mobile Base in Robot Assisted Order-Fulfillment Operations, filed on September 1, 2016, which is incorporated herein by reference in its entirety.

Continuing to refer to Fig. 8, in step 504 the SKU number(s) of the items is/are determined by the warehouse management system 15, and from the SKU number(s), the bin location(s) is/are determined in step 506. A list of bin locations for the order is then transmitted to robot 18. In step 508, robot 18 correlates the bin locations to fiducial ID's and from the fiducial ID's, the pose of each fiducial ID is obtained in step 510. In step 512 the robot 18 navigates to the pose as shown in Fig. 3, where an operator can pick the item to be retrieved from the appropriate bin and place it on the robot.

Item specific information, such as SKU number and bin location, obtained by the warehouse management system 15/order server 14, can be transmitted to tablet 48 on robot 18 so that the operator 50 can be informed of the particular items to be retrieved when the robot arrives at each fiducial marker location.

With the SLAM map and the pose of the fiducial ID's known, robot 18 can readily navigate to any one of the fiducial ID's using various robot navigation techniques. The preferred approach involves setting an initial route to the fiducial marker pose given the knowledge of the open space 112 in the warehouse 10 and the walls 114, shelves (such as shelf 12) and other obstacles 116. As the robot begins to traverse the warehouse using its laser radar 26, it determines if there are any obstacles in its path, either fixed or dynamic, such as other robots 18 and/or operators 50, and iteratively updates its path to the pose of the fiducial marker. The robot re-plans its route about once every 50 milliseconds, constantly searching for the most efficient and effective path while avoiding obstacles.

With the product SKU/fiducial ID to fiducial pose mapping technique combined with the SLAM navigation technique both described herein, robots 18 are able to very efficiently and effectively navigate the warehouse space without having to use more complex navigation approaches typically used which involve grid lines and intermediate fiducial markers to determine location within the warehouse.

With the SLAM map and the pose of the fiducial ID's known, robot 18 can readily navigate to any one of the fiducials using various robot navigation techniques. The preferred approach involves setting an initial route to the fiducial marker pose given the knowledge of the open space 112 in the warehouse 10 and the walls 114, shelves (such as shelf 12) and other obstacles 116. As the robot begins to traverse the warehouse using its laser-radar 22, it determines if there are any obstacles in its path, either fixed or dynamic, such as other robots 18 and/or operators 50, and iteratively updates its path to the pose of the fiducial marker. The robot re-plans its route about once every 50 milliseconds, constantly searching for the most efficient and effective path while avoiding obstacles. Localization of the robot within the warehouse can be achieved, for example, by many-to-many multiresolution scan matching (M3RSM) operating on the SLAM map. M3RSM is described in US Patent No. 10,386,851, issued August 20, 2019, entitled "MULTI-RESOLUTION SCAN MATCHING WITH EXCLUSION ZONES," the disclosure of which is incorporated by reference herein. As also described in US Patent No. 10,429,847, issued October 1, 2019, entitled "DYNAMIC WINDOW APPROACH USING OPTIMAL RECIPROCAL COLLISON AVOIDANCE COST-CRITIC" can be used.

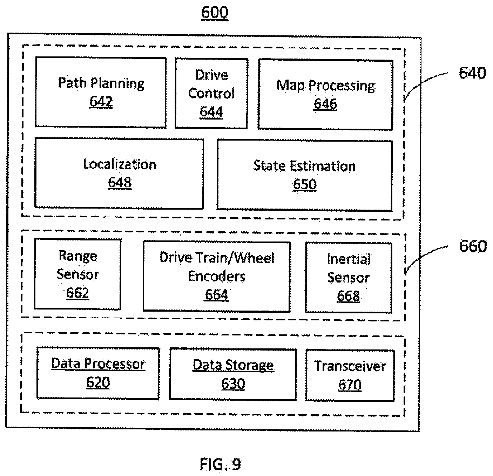

Fig. 9 illustrates a system view of one embodiment of robot 18 for use in robot navigation systems as described herein. Robot system 600 comprises data processor 620, data storage 630, processing modules 640, and sensor support modules 660. Processing modules 640 so may include path planning module 642, drive control module 644, map processing module 646, localization module 648, and state estimation module 650. Sensor support modules 660 may include range sensor module 662, drive train/wheel encoder module 664, and inertial sensor module 668.

Data processor 620, processing modules 640 and sensor support modules 660 are capable of communicating with any of the components, devices or modules herein shown or described for robot system 600. A transceiver module 670 may be included to transmit and receive data. Transceiver module 670 may transmit and receive data and information to and from a supervisor system or to and from one or other robots. Transmitting and receiving data may include map data, path data, search data, sensor data, location and orientation data, velocity data, and processing module instructions or code, robot parameter and environment settings, and other data necessary to the operation of robot system 600.

In some embodiments, range sensor modules 662 may comprise one or more of a scanning laser, radar, laser range finder, range finder, ultrasonic obstacle detector, a stereo vision system, a monocular vision system, a camera, and an image unit. Range sensor module 662 ma scan an environment around the robot to determine a location of one or more obstacles with respect to the robot. In some embodiments, drive train/wheel encoders 664 comprise one or more sensors for encoding wheel position and an actuator for controlling the positon of one or more wheels (e.g., ground engaging wheels). Robot system 600 may also include a ground speed sensor comprising a speedometer or radar-based sensor r a rotational velocity sensor. The rotational velocity sensor may comprise the combination of an accelerometer and an integrator. The rotational velocity sensor may provide an observed rotational velocity for the data processor 620, or any module thereof.

In some embodiments, sensor support modules 660 may provide translational data, position data, rotation data, level data, inertial data, and heading data, including historical data of instantaneous measures of velocity transition, position, rotation level, heading, and inertial data over time. The translational or rotational velocity may be detected with reference to one or more fixed reference points or stationary objects in the robot environment. Translational velocity may be expressed as an absolute speed in a direction or as a first derivative or robot position versus time. Rotational velocity may be expressed as a speed in angular units or as the first derivative of the angular position versus time. Translational and rotational velocity may be expressed with respect to an origin 0,0 (Fig. 4) and bearing of 0-degrees relative to an absolute or relative coordinate system. Processing modules 640 may use the observed translational velocity (or position versus time measurements) combined with detected rotational velocity to estimate observed rotational velocity of the robot.

In some embodiments, navigation by an autonomous or semi-autonomous robot requires some form of spatial model of the robot's environment. Spatial models are further described in US Patent No. 10,386,851. Spatial models may be represented by bitmaps, object maps, landmark maps, and other forms of two- and three-dimensional digital representations. A spatial model of a warehouse facility may represent a warehouse and obstacles within such as walls, ceilings, roof supports, windows and doors, shelving and storage bins. Obstacles may be stationary or moving, for example, such as other robots or machinery operating within the warehouse, or relatively fixed but changing, such as temporary partitions, pallets, shelves and bins as warehouse items are stocked, picked and replenished. Spatial models may also represent target locations, such as a shelf or bin marked with a fiducial to which a robot may be directed to perform a task or to a temporary holding location or to the location of a charging station. Spatial models can also include virtual obstacles and objects, such as barriers, threshold crossings, and RFID tunnels.

In some environments, a map may be used by a robot to determine its pose within an environment and to plan and control its movements along a path while avoiding obstacles. Such maps may be "local maps," representing spatial features in the immediate vicinity of the robot or target location, or "global maps," representing features on an area or facility encompassing the operating range of one or more robots. Maps may be provided to a robot from an external supervisory system or a robot may construct its map using onboard range finding and location sensors. One or more robots may cooperatively map a shared environment, the resulting map further enhanced as the robots navigate, collect, and share information about the environment.

In some embodiments the supervisory system may comprise a central server performing supervision of a plurality of robots in a manufacturing warehouse or other facility, or the supervisory system may comprise a distributed supervisory system consisting of one or more servers operating within or without the facility either fully remotely or partially without loss of generality in the application of the methods and systems herein described. The supervisory system may include a server or servers having at least a computer processor and a memory for executing a supervisory system and may further include one or more transceivers for communicating information to one or more robots operating in the warehouse or other facility. Supervisory systems may be hosted on computer servers or may be hosted in the cloud and communicating with the local robots via a local transceiver configured to receive and transmit messages to and from the robots and the supervisory system over wired and/or wireless communications media including over the Internet.

One skilled in the art would recognize that robotic mapping for the purposes of the present invention could be performed using methods known in the art without loss of generality. Further discussion of methods for robotic mapping can be found in Sebastian Thrun, "Robotic Mapping: A Survey", Carnegie-Mellon University, CMU-CS-02-111, February, 2002, which is incorporated herein by reference.

### Robot Navigation Management

Some navigational spaces or environments, such as a warehouse, can be divided into two or more zones. Such zones can include, for example and without limitation, a secured area for products requiring greater security, a temperature controlled area such as a freezer, an area for a particular type of goods, or an area with a different elevation from an adjacent area. Zones can include, for example, shelves 12 filled with items to be included in an order, as described above. Zones can be free of shelves or other obstacles, for example, to accommodate rapid movement of robots within the environment.

Zones can be demarcated by physical barriers, such as fixed walls or movable partitions. Zones can be demarcated by virtual barriers, in which no physical barrier is present. Physical barriers can include a door or other movable closure therein. Adjacent zones having different elevations can be accessible via a sloped floor or an elevator.

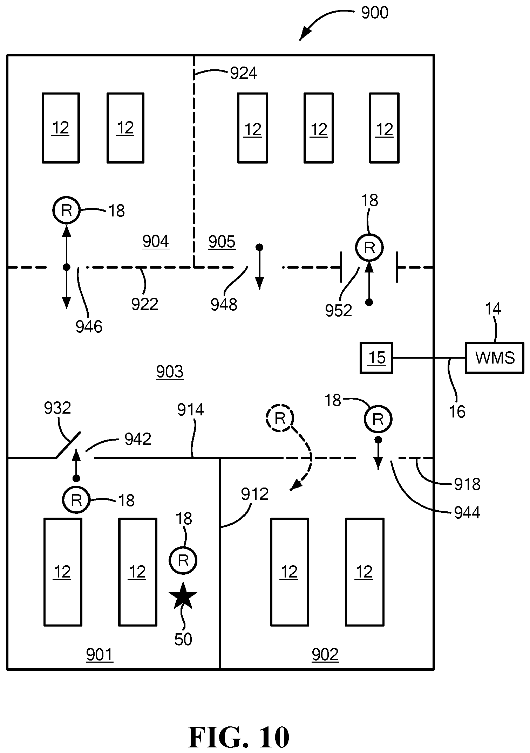

Described herein are systems and methods for robot navigation management in order to enable a robot 18 to navigate an environment divided into two or more zones. FIG. 10 is a map illustrating a navigational space or environment 900 that has been divided into five zones, 901, 902, 903, 904, 905. It will be appreciated that the environment can be divided into any desired number and type of zones. Borders between adjacent zones can be demarcated by a physical barrier or a virtual barrier or a combination thereof. As shown in FIG. 10, the first zone 901 is demarcated from the second zone 902 and the third zone 903 via a physical barrier, such as walls indicated by solid line 912, 914 in FIG. 9. A door 932 is provided in the wall 914, which can be opened to allow passage of robots or humans or can be closed to prevent passage of robots or humans. A border between the second zone 902 and the third zone 903 is partially demarcated by a physical wall 918, indicated by solid line, and partially demarcated by a virtual barrier 918, indicated by a dashed line. A border between the third zone 903 and the fourth and fifth zones 904, 905 is demarcated by a virtual barrier 922, indicated by a dashed line. A border between the fourth and fifth zones 904, 905 is similarly demarcated by a virtual barrier 924 indicated by a dashed line.

The map also indicates passages or thresholds through the borders, where robots 18 or humans 50 can pass from one zone to an adjacent zone. In the embodiment illustrated in Fig. 10, the door 932 in the wall 914 between the first zone 901 and the third zone 903 is located at a threshold 942 along the border. A virtual threshold 944 is located in the virtual barrier 918 forming the border between the second zone 902 and the third zone 903 and in the virtual barrier forming the border between the third zone 903 and the fourth zone 904. Two virtual thresholds 946, 948 are located in the virtual barrier 922 forming the border between the third zone 903 and the fifth zone 905. A threshold 952, which can be an RFID tunnel to enable tracking of robots crossing the threshold, is located the third zone 903 and the fifth zone 905. No threshold is located in the physical barrier between the first zone 901 and the second zone 902 or in the virtual barrier between the fourth zone 904 and the fifth zone 905. The provision of virtual barriers allows for sectioning of the warehouse without having to erect physical walls. Sections can be changed if desired by changing the virtual barriers. Additionally, as indicated, for example, in the case of zone 905, it is possible to track entry of robots into the zone 905 via an RFID tunnel which is shown at the entrance of zone 905.

Thresholds can be defined to allow passage of robots in both directions or in only one direction. For example, the thresholds 932 and 946 are defined to allow passage in both directions, indicated by double-headed arrows. The threshold 952 is defined to allow passage in one direction, from zone 903 into zone 905, and the threshold 948 is defined to allow passage in an opposite direction, from zone 905 into zone 903.

At least one waypoint is associated with each threshold. In some embodiments, two waypoints are associated with each threshold. In some embodiments, a waypoint can be defined at a location spaced a distance from the border. In some embodiments, a waypoint can be defined on the border along the threshold. In some embodiments, two waypoints can be defined in association with a threshold spaced at locations on opposite sides of the border along the threshold. In some embodiments, two waypoints can define a start and an end of a passageway across a threshold, for example, to provide efficient one-way travel along the passageway.

Waypoints can be defined by reference to a point of origin 110, as described above with respect to Fig. 4. Thus, each waypoint can be defined by at least x and y coordinates or by x, y, and z coordinates. Each robot 18 is provided with a look-up table stored in memory setting forth the coordinates of each waypoint, thus enabling the robot to navigate to each waypoint. The lookup table can also include a pose associated with each waypoint. Thus, the look-up table can include an orientation or quaternion (x,y,z,ω), as described above. In some embodiments, a fiducial marker can be associated with one or more waypoints, although a fiducial marker associated with a waypoint is not necessary for robot navigation as described herein. As described above in conjunction with FIG. 4, a robot, provided with the coordinates of a waypoint, can navigate to that waypoint, for example, using wheel encoders and heading sensors. Upon reaching a desired waypoint, the robot can orient in a desired pose location associated with that waypoint.

In order to manage such navigation, as shown in FIG. 10, a warehouse management system server or order server can be provided with a map 900. Each robot 18 seeking to navigate within the environment is in communication with the server. In general, to the extent that each robot 18 is operating within the navigational space, it can be operating to fulfill one or more tasks of an ordered task list, as described above. Based on its prescribed task list, each robot can determine an optimized route as described above, which may require the robot to traverse a threshold. For example, the robot can utilize the path planning module 642 and a pathfinder algorithm as described above.

In some embodiments, the robot may configured to pass over a waypoint, and traverse the threshold without stopping. In some embodiments, upon arriving at a waypoint, a robot may be configured to pause before traversing the threshold. In some embodiments, after pausing at the waypoint, the robot may determine if the threshold is clear of traffic, for example, using a camera, a laser detector, or a radar detector, or a combination thereof, as described above, before crossing the threshold. In some embodiments, upon arriving at a waypoint, a robot can receive further instructions or commands from the robot monitoring server regarding whether or not to traverse the threshold. Such instructions or commands can either be pushed automatically from the server or be in response to a request by the robot. By requiring the robot to pass over or pause at the waypoint, the navigation of the robot across the threshold is controlled, directing passage of the robot across zone borders (physical or virtual).

In some embodiments, the robot may be configured to join a queue of robots waiting to traverse the threshold. For example, another robot may already be paused at the pose location defining the waypoint. And, one or more other robots may be waiting in queue locations to also cross the threshold at the appropriate time. The newly arriving robot can join a queue slot or location, offset from the pose location of the waypoint and/or offset from the pose locations of other robots waiting in the queue to traverse the threshold. The queueing of robots may be managed, for example, by the navigation server or a warehouse management server 15.

For example, when one or more robots attempt to navigate to a space occupied by another robot, alternative destinations for the robots are created to place them in a queue and avoid a "race condition" from occurring. When another robot tries to navigate to an occupied, the robot is redirected to a temporary holding location or queue slot offset from the occupied pose. The locations of the queue slots may be non-uniform and variable given the dynamic environment of the warehouse. The queue slots maybe offset according to a queuing algorithm that observes the underlying global map and the existing obstacles and constraints of the local map. The queuing algorithm may also consider the practical limits of queuing in the space proximate the target location/pose to avoid blocking traffic, interfering with other locations, and creating new obstacles.

In addition, the proper queue slotting of robots into the queue can be managed, such that a robot with a first priority to occupy the pose may be queued in the first queue slot, while the other robots are queued in the other queue slots based on their respective priorities. Priorities may be determined by the order of the robots' entry into a zone proximate the pose. When a robot moves from the pose (target location), a next robot moves from the queue slot to the pose, and any other robots can advance in queue slot positions, respectively. Thus, the manner in which the robots are navigated to the queue slots and ultimately the target location is accomplished by temporarily redirecting them from the pose of the target location to the pose(s) of the queue slot(s). In other words, when it is determined that a robot must be placed in a queue slot, its target pose is temporarily adjusted to a pose corresponding to the location of the queue slot to which it is assigned. As it moves up in position in the queue, the pose is again adjusted temporarily to the pose of the queue slot with the next highest priority until it is able to reach its original target location at which time the pose is reset to the original target pose. Queueing of robots is described further in U.S. Patent No. 10,513,033, issued on December 24, 2019, entitled "ROBOT QUEUING IN ORDER FULFILLMENT OPERATIONS," the disclosure of which is incorporated by reference herein.

In some embodiments, the route may require the robot to navigate to a zone having an elevation different from an elevation of an adjacent zone. In some embodiments, the threshold may cross a sloped surface or ramp between the zones. In some embodiments, depending on the degree of slope, two waypoints can define a start and an end of a passageway along the slope across the threshold. In some embodiments, an elevator can be provided to transport a robot from one zone to another. A threshold can be defined at the elevator door, such that a robot can arrive at a waypoint associated with the elevator and can request and/or issue an instruction(s) to call the elevator, open the elevator door so that the robot can enter the elevator, and direct the elevator to the next zone.

By way of further description, in the absence of a threshold defined in a virtual barrier, a robot might determine that a route that passes close to the end of a physical barrier is the shortest route to a destination. For example, the robot 18', indicated by a dashed line in Fig. 9, is shown passing close to the end of the wall taking the shorter, more efficient route. The shorter route could, however, result in more congestion or otherwise be undesirable. Thus, by defining a threshold and an associated waypoint(s) in a determined location, in this case spaced further from the end of the wall along the border, the robot 18' is forced to take the route passing over or pausing at the waypoint for the threshold. Therefore, the less desirable, but possibly more likely route, which the robot would normally take is avoided.

The server can be any server or computing device capable of tracking robot and/or human operator activity within the warehouse, including, for example, the warehouse management system 15, the order-server 14, a standalone server, a network of servers, a cloud, a processor and memory of the robot tablet 48, the processor and memory of the base 20 of the robot 18, a distributed system comprising the memories and processors of at least two of the robot tablets 48 and/or bases 20. In some embodiments, the waypoint information can be pushed automatically from the robot monitoring server 902 to the robot 18. In other embodiments, the waypoint information can be sent responsive to a request from the robot 18.

Thus, the navigation management system and method can advantageously direct a robot through a navigational space that has been divided into zones more efficiently, with lower collision risk, and can prevent inefficient delays in robot task completion.

### Non-Limiting Example Computing Devices

FIG. 10 is a block diagram of an exemplary computing device 1210 such as can be used, or portions thereof, in accordance with various embodiments as described above with reference to FIGS. 1-9. The computing device 1210 includes one or more non-transitory computer-readable media for storing one or more computer-executable instructions or software for implementing exemplary embodiments. The non-transitory computer-readable media can include, but are not limited to, one or more types of hardware memory, non-transitory tangible media (for example, one or more magnetic storage disks, one or more optical disks, one or more flash drives), and the like. For example, memory 1216 included in the computing device 1210 can store computer-readable and computer-executable instructions or software for performing the operations disclosed herein. For example, the memory can store software application 1240 which is programmed to perform various of the disclosed operations as discussed with respect to FIGS. 1-9. The computing device 1210 can also include configurable and/or programmable processor 1212 and associated core 1214, and optionally, one or more additional configurable and/or programmable processing devices, e.g., processor(s) 1212' and associated core (s) 1214' (for example, in the case of computational devices having multiple processors/cores), for executing computer-readable and computer-executable instructions or software stored in the memory 1216 and other programs for controlling system hardware. Processor 1212 and processor(s) 1212' can each be a single core processor or multiple core (1214 and 1214') processor.

Virtualization can be employed in the computing device 1210 so that infrastructure and resources in the computing device can be shared dynamically. A virtual machine 1224 can be provided to handle a process running on multiple processors so that the process appears to be using only one computing resource rather than multiple computing resources. Multiple virtual machines can also be used with one processor.

Memory 1216 can include a computational device memory or random access memory, such as but not limited to DRAM, SRAM, EDO RAM, and the like. Memory 1216 can include other types of memory as well, or combinations thereof.

A user can interact with the computing device 1210 through a visual display device 1201, 111A-D, such as a computer monitor, which can display one or more user interfaces 1202 that can be provided in accordance with exemplary embodiments. The computing device 1210 can include other I/O devices for receiving input from a user, for example, a keyboard or any suitable multipoint touch interface 1218, a pointing device 1220 (e.g., a mouse). The keyboard 1218 and the pointing device 1220 can be coupled to the visual display device 1201. The computing device 1210 can include other suitable conventional I/O peripherals.

The computing device 1210 can also include one or more storage devices 1234, such as but not limited to a hard-drive, CD-ROM, or other computer readable media, for storing data and computer-readable instructions and/or software that perform operations disclosed herein. Exemplary storage device 1234 can also store one or more databases for storing any suitable information required to implement exemplary embodiments. The databases can be updated manually or automatically at any suitable time to add, delete, and/or update one or more items in the databases.

The computing device 1210 can include a network interface 1222 configured to interface via one or more network devices 1232 with one or more networks, for example, Local Area Network (LAN), Wide Area Network (WAN) or the Internet through a variety of connections including, but not limited to, standard telephone lines, LAN or WAN links (for example, 802.11, T1, T3, 56 kb, X.25), broadband connections (for example, ISDN, Frame Relay, ATM), wireless connections, controller area network (CAN), or some combination of any or all of the above. The network interface 1222 can include a built-in network adapter, network interface card, PCMCIA network card, card bus network adapter, wireless network adapter, USB network adapter, modem or any other device suitable for interfacing the computing device 1210 to any type of network capable of communication and performing the operations described herein. Moreover, the computing device 1210 can be any computational device, such as a workstation, desktop computer, server, laptop, handheld computer, tablet computer, or other form of computing or telecommunications device that is capable of communication and that has sufficient processor power and memory capacity to perform the operations described herein.

The computing device 1210 can run any operating system 1226, such as any of the versions of the Microsoft^{®} Windows^{®} operating systems (Microsoft, Redmond, Wash.), the different releases of the Unix and Linux operating systems, any version of the MAC OS^{®} (Apple, Inc., Cupertino, Calif.) operating system for Macintosh computers, any embedded operating system, any real-time operating system, any open source operating system, any proprietary operating system, or any other operating system capable of running on the computing device and performing the operations described herein. In exemplary embodiments, the operating system 1226 can be run in native mode or emulated mode. In an exemplary embodiment, the operating system 1226 can be run on one or more cloud machine instances.

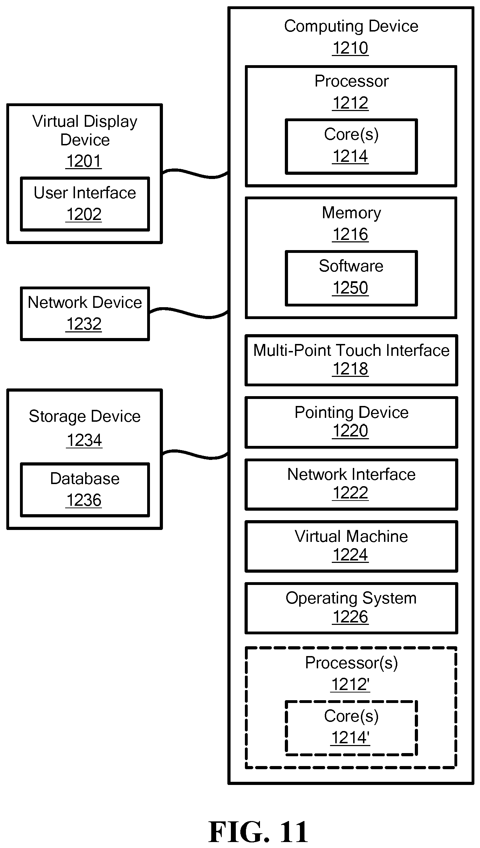

FIG. 11 is an example computational device block diagram of certain distributed embodiments. Although FIGS. 1-9, and portions of the exemplary discussion above, make reference to a warehouse management system 15, order-server 14, or robot tracking server 902 each operating on an individual or common computing device, one will recognize that any one of the warehouse management system 15, the order-server 14, or the robot navigation server _ may instead be distributed across a network 1305 in separate server systems 1301a-d and possibly in user systems, such as kiosk, desktop computer device 1302, or mobile computer device 1303. For example, the order-server 14 may be distributed amongst the tablets 48 of the robots 18. In some distributed systems, modules of any one or more of the warehouse management system software and/or the order-server software can be separately located on server systems 1301a-d and can be in communication with one another across the network 1305.

## Claims

1. A method for navigating a first autonomous robot (18) from a first zone (901) to a second, adjacent zone (903) within an environment in a first direction and for navigating a second autonomous robot from the second zone to the first zone in a second direction, opposite the first direction, comprising:
defining, by a server (14, 15), the first zone and the second zone within the environment, a first threshold along a border between the first and second zones, and a first waypoint and an orientation associated with the first waypoint, associated with the first threshold (942);
defining, by the server, a second threshold along the border between the first and second zones, and a second waypoint, and an orientation associated with the second waypoint, associated with the second threshold;
determining by the first autonomous robot (18) a first route from the first zone (901) to the second zone (903) crossing the first threshold (942), the first route including the first waypoint and the orientation associated with the first waypoint; and
determining by the second autonomous robot a second route from the second zone to the first zone crossing the second threshold, the second route including the second waypoint and the orientation associated with the second waypoint;
navigating the first robot (18) along the first route from the first zone to the second zone, including traversing through the first waypoint in conjunction with crossing the first threshold and the step of determining a first route includes determining a first route segment to the first waypoint, such that the first robot (18) reaches the first waypoint and orientates itself with the orientation associated with the first waypoint
navigating the second robot along the second route from the second zone to the first zone, including traversing through the second waypoint in conjunction with crossing the second threshold and the step of determining the second route includes determining a second route segment to the second waypoint, such that the second robot (18) reaches the second waypoint and orientates itself with the orientation associated with the second waypoint;
wherein the border between the two adjacent zones is a physical barrier (914) and the first and second thresholds are located at an opening in the physical barrier.

2. The method of claim 1, wherein the step of traversing through the first waypoint includes traversing the first waypoint without pausing at the waypoint or pausing at the first waypoint before crossing the first threshold (942) and wherein the step of traversing the second waypoint includes traversing the second waypoint pose without pausing at the second waypoint pose before crossing the second threshold.

3. The method of either of claims 1 or 2, wherein the first waypoint is spaced a distance from the first threshold (942) or located on the border along the first threshold and wherein the second waypoint is spaced a distance from the second threshold or located on the border along the second threshold.

4. The method of any preceding claim, further comprising joining, by the first robot (18), a queue of robots waiting to pass the first threshold (942), or detecting, by the first robot (18), an obstruction in the first threshold with a camera (24a, 24b), a laser detector, or a radar detector, or a combination thereof; and further comprising joining, by the second robot, a queue of robots waiting to pass the second threshold (942), or detecting, by the second robot (18), an obstruction in the second threshold with a camera (24a, 24b), a laser detector, or a radar detector, or a combination thereof.

5. The method of any preceding claim, wherein each of the zones is a secured area, a temperature controlled area, a warehouse area (10), or an area having a different elevation from an adjacent area, or a combination thereof.

6. A system for navigating an autonomous robot (18) from a first zone (901) to a second, adjacent zone (903) within an environment in a first direction and for navigating a second autonomous robot from the second zone to the first zone in a second direction opposite the first direction, comprising:
a server (14, 15) configured to define the first zone (901) and the second zone (903) within the environment, a first threshold (942) along a border between the first and second zones, and a first waypoint associated with the first threshold and an orientation associated with the first waypoint, associated with the first threshold; wherein the server is configured to define a second threshold along the border between the first and second zones, and a second waypoint associated with the second threshold and an orientation associated with the second waypoint, associated with the second threshold;
the first autonomous robot (18) in communication with the server (14, 15), the first robot including a processor (620) and a memory (630), the memory storing instructions that, when executed by the processor, case the robot to:
determine a first route from the first zone (901) to the second zone (903) crossing the first threshold (942), the first route including the first waypoint and the orientation associated with the first waypoint; and
navigate the first robot (18) along the first route from the first zone to the second zone, including traversing through the first waypoint in conjunction with crossing the first threshold and the memory further stores instructions that, when executed by the processor (620), cause the first autonomous robot (18) to determine a first route segment to the first waypoint, such that the first robot (18) reaches the first waypoint and orientates itself with the orientation associated with the first waypoint
the second autonomous robot in communication with the server, the second robot including a processor and a memory, the memory storing instructions that, when executed by the processor, cause the second robot to:
determine a second route from the second zone to the first zone crossing the second threshold, the second route including the second waypoint; and
navigate the second robot along the second route from the second zone to the first zone, including traversing the second waypoint in conjunction with crossing the second threshold;
wherein the second waypoint is defined by a second waypoint and the memory further stores instructions that, when executed by the processor, cause the second autonomous robot to determine a second route segment to the second waypoint;
wherein the border (914) between the two adjacent zones is a physical barrier and the first and second thresholds are located at an opening in the physical barrier.

7. The system of claim 6, wherein the memory (630) further stores instructions that, when executed by the processor (620), cause the first robot (18) to traverse through the first waypoint without pausing at the first waypoint or to pause at the first waypoint before crossing the first threshold (942) and wherein the second waypoint is spaced a distance from the second threshold or located on the border along the second threshold.

8. The system of either of claims 6 or 7, wherein the first waypoint position is spaced a distance from the first threshold (942) or located on the border along the first threshold (942), or wherein the server (14, 15) is configured to define a second waypoint and a second orientation associated with the second waypoint, associated with the threshold (942), the first waypoint and the second waypoint located on opposite sides of the first threshold.

9. The system of any of claims 6 to 8, wherein the memory (630) further stores instructions that, when executed by the processor, cause the first autonomous robot (18) to join a queue of robots waiting to pass the first threshold (942), or cause the first autonomous robot to detect an obstruction in the first threshold with a camera (24a, 24b), a laser detector, or a radar detector, or a combination thereof; and wherein the memory further stores instructions that, when executed by the processor, cause the second autonomous robot to join a queue of robots waiting to pass the second threshold, or cause the second autonomous robot to detect an obstruction in the second threshold with a camera (24a, 24b), a laser detector, or a radar detector, or a combination thereof.

10. The system of any of claims 6 to 9, wherein each of the zones is a secured area, a temperature controlled area, a warehouse area (10), or an area having a different elevation from an adjacent area, or a combination thereof.

11. The system of any of claims 6 to 10, wherein the server (14, 15) further comprises one or more of a warehouse management system, an order-server (14), a standalone server, a distributed system comprising the memory (630) of at least two of the plurality of robots (18, 18'), or combinations thereof.

## Patentansprüche

1. Ein Verfahren zum Navigieren eines ersten autonomen Roboters (18) von einer ersten Zone (901) zu einer zweiten, benachbarten Zone (903) innerhalb einer Umgebung in einer ersten Richtung und zum Navigieren eines zweiten autonomen Roboters von der zweiten Zone zu der ersten Zone in einer zweiten Richtung, entgegengesetzt zu der ersten Richtung, umfassend:
Definieren, durch einen Server (14, 15), der ersten Zone und der zweiten Zone innerhalb der Umgebung, einer ersten Schwelle entlang einer Grenze zwischen der ersten und der zweiten Zone, und eines ersten Wegpunkts und einer dem ersten Wegpunkt zugeordneten Orientierung, die der ersten Schwelle (942) zugeordnet sind;
Definieren, durch den Server, einer zweiten Schwelle entlang der Grenze zwischen der ersten und der zweiten Zone, und eines zweiten Wegpunkts, und einer dem zweiten Wegpunkt zugeordneten Orientierung, die der zweiten Schwelle zugeordnet sind;
Bestimmen, durch den ersten autonomen Roboter (18), einer ersten Route von der ersten Zone (901) zu der zweiten Zone (903), die die erste Schwelle (942) überquert, wobei die erste Route den ersten Wegpunkt und die dem ersten Wegpunkt zugeordnete Orientierung beinhaltet; und
Bestimmen, durch den zweiten autonomen Roboter, einer zweiten Route von der zweiten Zone zu der ersten Zone, die die zweite Schwelle überquert, wobei die zweite Route den zweiten Wegpunkt und die dem zweiten Wegpunkt zugeordnete Orientierung beinhaltet;
Navigieren des ersten Roboters (18) entlang der ersten Route von der ersten Zone zu der zweiten Zone, wobei das Durchfahren des ersten Wegpunkts in Verbindung mit dem Überqueren der ersten Schwelle eingeschlossen ist und der Schritt des Bestimmens einer ersten Route das Bestimmen eines ersten Routenabschnitts zu dem ersten Wegpunkt beinhaltet, sodass der erste Roboter (18) den ersten Wegpunkt erreicht und sich gemäß der dem ersten Wegpunkt zugeordneten Orientierung ausrichtet
Navigieren des zweiten Roboters entlang der zweiten Route von der zweiten Zone zu der ersten Zone, wobei das Durchfahren des zweiten Wegpunkts in Verbindung mit dem Überqueren der zweiten Schwelle eingeschlossen ist und der Schritt des Bestimmens der zweiten Route das Bestimmen eines zweiten Routenabschnitts zu dem zweiten Wegpunkt beinhaltet, sodass der zweite Roboter (18) den zweiten Wegpunkt erreicht und sich gemäß der dem zweiten Wegpunkt zugeordneten Orientierung ausrichtet;
wobei die Grenze zwischen den zwei benachbarten Zonen eine physische Barriere (914) ist und sich die erste und die zweite Schwelle an einer Öffnung in der physischen Barriere befinden.

2. Das Verfahren aus Anspruch 1, wobei der Schritt des Durchfahrens des ersten Wegpunkts das Durchfahren des ersten Wegpunkts ohne Anhalten an dem Wegpunkt oder das Anhalten an dem ersten Wegpunkt vor dem Überqueren der ersten Schwelle (942) beinhaltet und wobei der Schritt des Durchfahrens des zweiten Wegpunkts das Durchfahren der Pose des zweiten Wegpunkts ohne Anhalten an der Pose des zweiten Wegpunkts vor dem Überqueren der zweiten Schwelle beinhaltet.

3. Das Verfahren aus einem der Ansprüche 1 oder 2, wobei der erste Wegpunkt in einem Abstand von der ersten Schwelle (942) angeordnet ist oder sich auf der Grenze entlang der ersten Schwelle befindet und wobei der zweite Wegpunkt in einem Abstand von der zweiten Schwelle angeordnet ist oder sich auf der Grenze entlang der zweiten Schwelle befindet.

4. Das Verfahren aus einem der vorhergehenden Ansprüche, ferner umfassend das Einreihen, durch den ersten Roboter (18), in eine Warteschlange von Robotern, die darauf warten, die erste Schwelle (942) zu passieren, oder das Erkennen, durch den ersten Roboter (18), eines Hindernisses in der ersten Schwelle mittels einer Kamera (24a, 24b), eines Laserdetektors oder eines Radardetektors oder einer Kombination davon; und ferner umfassend das Einreihen, durch den zweiten Roboter, in eine Warteschlange von Robotern, die darauf warten, die zweite Schwelle (942) zu passieren, oder das Erkennen, durch den zweiten Roboter (18), eines Hindernisses in der zweiten Schwelle mittels einer Kamera (24a, 24b), eines Laserdetektors oder eines Radardetektors oder einer Kombination davon.

5. Das Verfahren aus einem der vorhergehenden Ansprüche, wobei jede der Zonen ein gesicherter Bereich ist, ein Bereich mit kontrollierter Temperatur, ein Lagerhausbereich (10) oder ein Bereich mit einer anderen Höhenlage als ein benachbarter Bereich oder eine Kombination davon.

6. Ein System zum Navigieren eines autonomen Roboters (18) von einer ersten Zone (901) zu einer zweiten, benachbarten Zone (903) innerhalb einer Umgebung in einer ersten Richtung und zum Navigieren eines zweiten autonomen Roboters von der zweiten Zone zu der ersten Zone in einer zweiten Richtung entgegengesetzt zu der ersten Richtung, umfassend:
einen Server (14, 15), der dazu konfiguriert ist, die erste Zone (901) und die zweite Zone (903) innerhalb der Umgebung, eine erste Schwelle (942) entlang einer Grenze zwischen der ersten und der zweiten Zone, und einen der ersten Schwelle zugeordneten ersten Wegpunkt und eine dem ersten Wegpunkt zugeordnete Orientierung, die der ersten Schwelle zugeordnet sind, zu definieren; wobei der Server dazu konfiguriert ist, eine zweite Schwelle entlang der Grenze zwischen der ersten und der zweiten Zone, und einen der zweiten Schwelle zugeordneten zweiten Wegpunkt und eine dem zweiten Wegpunkt zugeordnete Orientierung, die der zweiten Schwelle zugeordnet sind, zu definieren;
den ersten autonomen Roboter (18), der mit dem Server (14, 15) in Kommunikation steht, wobei der erste Roboter einen Prozessor (620) und einen Speicher (630) beinhaltet, wobei der Speicher Anweisungen speichert, die, wenn sie durch den Prozessor ausgeführt werden, den Roboter dazu veranlassen:
eine erste Route von der ersten Zone (901) zu der zweiten Zone (903), die die erste Schwelle (942) überquert, zu bestimmen, wobei die erste Route den ersten Wegpunkt und die dem ersten Wegpunkt zugeordnete Orientierung beinhaltet; und
den ersten Roboter (18) entlang der ersten Route von der ersten Zone zu der zweiten Zone zu navigieren, wobei das Durchfahren des ersten Wegpunkts in Verbindung mit dem Überqueren der ersten Schwelle eingeschlossen ist und der Speicher ferner Anweisungen speichert, die, wenn sie durch den Prozessor (620) ausgeführt werden, den ersten autonomen Roboter (18) dazu veranlassen, einen ersten Routenabschnitt zu dem ersten Wegpunkt zu bestimmen, sodass der erste Roboter (18) den ersten Wegpunkt erreicht und sich gemäß der dem ersten Wegpunkt zugeordneten Orientierung ausrichtet
den zweiten autonomen Roboter, der mit dem Server in Kommunikation steht, wobei der zweite Roboter einen Prozessor und einen Speicher beinhaltet, wobei der Speicher Anweisungen speichert, die, wenn sie durch den Prozessor ausgeführt werden, den zweiten Roboter dazu veranlassen:
eine zweite Route von der zweiten Zone zu der ersten Zone, die die zweite Schwelle überquert, zu bestimmen, wobei die zweite Route den zweiten Wegpunkt beinhaltet; und
den zweiten Roboter entlang der zweiten Route von der zweiten Zone zu der ersten Zone zu navigieren, einschließlich des Durchfahrens des zweiten Wegpunkts in Verbindung mit dem Überqueren der zweiten Schwelle;
wobei der zweite Wegpunkt durch einen zweiten Wegpunkt definiert ist und der Speicher ferner Anweisungen speichert, die, wenn sie durch den Prozessor ausgeführt werden, den zweiten autonomen Roboter dazu veranlassen, einen zweiten Routenabschnitt zu dem zweiten Wegpunkt zu bestimmen;
wobei die Grenze (914) zwischen den zwei benachbarten Zonen eine physische Barriere ist und sich die erste und die zweite Schwelle an einer Öffnung in der physischen Barriere befinden.

7. Das System aus Anspruch 6, wobei der Speicher (630) ferner Anweisungen speichert, die, wenn sie durch den Prozessor (620) ausgeführt werden, den ersten Roboter (18) dazu veranlassen, den ersten Wegpunkt ohne Anhalten an dem ersten Wegpunkt zu durchfahren oder vor dem Überqueren der ersten Schwelle (942) an dem ersten Wegpunkt anzuhalten, und wobei der zweite Wegpunkt in einem Abstand von der zweiten Schwelle angeordnet ist oder sich auf der Grenze entlang der zweiten Schwelle befindet.

8. Das System aus einem der Ansprüche 6 oder 7, wobei die Position des ersten Wegpunkts in einem Abstand von der ersten Schwelle (942) angeordnet ist oder sich auf der Grenze entlang der ersten Schwelle (942) befindet, oder wobei der Server (14, 15) dazu konfiguriert ist, einen zweiten Wegpunkt und eine dem zweiten Wegpunkt zugeordnete zweite Orientierung, die der Schwelle (942) zugeordnet sind, zu definieren, wobei sich der erste Wegpunkt und der zweite Wegpunkt auf entgegengesetzten Seiten der ersten Schwelle befinden.

9. Das System aus einem der Ansprüche 6 bis 8, wobei der Speicher (630) ferner Anweisungen speichert, die, wenn sie durch den Prozessor ausgeführt werden, den ersten autonomen Roboter (18) dazu veranlassen, sich in eine Warteschlange von Robotern einzureihen, die darauf warten, die erste Schwelle (942) zu passieren, oder den ersten autonomen Roboter dazu veranlassen, ein Hindernis in der ersten Schwelle mittels einer Kamera (24a, 24b), eines Laserdetektors oder eines Radardetektors oder einer Kombination davon zu erkennen; und wobei der Speicher ferner Anweisungen speichert, die, wenn sie durch den Prozessor ausgeführt werden, den zweiten autonomen Roboter dazu veranlassen, sich in eine Warteschlange von Robotern einzureihen, die darauf warten, die zweite Schwelle zu passieren, oder den zweiten autonomen Roboter dazu veranlassen, ein Hindernis in der zweiten Schwelle mittels einer Kamera (24a, 24b), eines Laserdetektors oder eines Radardetektors oder einer Kombination davon zu erkennen.

10. Das System aus einem der Ansprüche 6 bis 9, wobei jede der Zonen ein gesicherter Bereich, ein Bereich mit kontrollierter Temperatur, ein Lagerhausbereich (10) oder ein Bereich mit einer anderen Höhenlage als ein benachbarter Bereich oder eine Kombination davon ist.

11. Das System aus einem der Ansprüche 6 bis 10, wobei der Server (14, 15) ferner eines oder mehrere von einem Lagerverwaltungssystem, einem Auftragsserver (14), einem eigenständigen Server, einem verteilten System, das den Speicher (630) von mindestens zwei der Vielzahl von Robotern (18, 18') umfasst, oder Kombinationen davon umfasst.

## Revendications

1. Un procédé pour faire naviguer un premier robot autonome (18) d'une première zone (901) à une deuxième zone adjacente (903) au sein d'un environnement dans une première direction et pour faire naviguer un deuxième robot autonome de la deuxième zone à la première zone dans une deuxième direction, opposée à la première direction, comprenant :
la définition, par un serveur (14, 15), de la première zone et de la deuxième zone au sein de l'environnement, d'un premier seuil le long d'une limite entre les première et deuxième zones, et d'un premier point de cheminement et d'une orientation associée au premier point de cheminement, associés au premier seuil (942) ;
la définition, par le serveur, d'un deuxième seuil le long de la limite entre les première et deuxième zones, et d'un deuxième point de cheminement, et d'une orientation associée au deuxième point de cheminement, associés au deuxième seuil ;
la détermination par le premier robot autonome (18) d'un premier itinéraire de la première zone (901) à la deuxième zone (903) franchissant le premier seuil (942), le premier itinéraire incluant le premier point de cheminement et l'orientation associée au premier point de cheminement ; et
la détermination par le deuxième robot autonome d'un deuxième itinéraire de la deuxième zone à la première zone franchissant le deuxième seuil, le deuxième itinéraire incluant le deuxième point de cheminement et l'orientation associée au deuxième point de cheminement ;
la navigation du premier robot (18) le long du premier itinéraire de la première zone à la deuxième zone, le passage par le premier point de cheminement en conjonction avec le franchissement du premier seuil étant inclus et l'étape de détermination d'un premier itinéraire incluant la détermination d'un premier segment d'itinéraire jusqu'au premier point de cheminement, de telle sorte que le premier robot (18) atteigne le premier point de cheminement et s'oriente selon l'orientation associée au premier point de cheminement
la navigation du deuxième robot le long du deuxième itinéraire de la deuxième zone à la première zone, le passage par le deuxième point de cheminement en conjonction avec le franchissement du deuxième seuil étant inclus et l'étape de détermination du deuxième itinéraire incluant la détermination d'un deuxième segment d'itinéraire jusqu'au deuxième point de cheminement, de telle sorte que le deuxième robot (18) atteigne le deuxième point de cheminement et s'oriente selon l'orientation associée au deuxième point de cheminement ;
dans lequel la limite entre les deux zones adjacentes est une barrière physique (914) et les premier et deuxième seuils sont situés au niveau d'une ouverture dans la barrière physique.

2. Le procédé de la revendication 1, dans lequel l'étape de passage par le premier point de cheminement inclut le passage par le premier point de cheminement sans marquer de pause au point de cheminement ou le fait de marquer une pause au premier point de cheminement avant de franchir le premier seuil (942) et dans lequel l'étape de passage par le deuxième point de cheminement inclut le passage par la pose du deuxième point de cheminement sans marquer de pause à la pose du deuxième point de cheminement avant de franchir le deuxième seuil.

3. Le procédé de l'une ou l'autre des revendications 1 ou 2, dans lequel le premier point de cheminement est situé à une certaine distance du premier seuil (942) ou sur la limite le long du premier seuil et dans lequel le deuxième point de cheminement est situé à une certaine distance du deuxième seuil ou sur la limite le long du deuxième seuil.

4. Le procédé de l'une quelconque des revendications précédentes, comprenant en outre le fait, pour le premier robot (18), de rejoindre une file d'attente de robots attendant de franchir le premier seuil (942), ou la détection, par le premier robot (18), d'un obstacle dans le premier seuil avec une caméra (24a, 24b), un détecteur laser, ou un détecteur radar, ou une combinaison de ceux-ci ; et comprenant en outre le fait, pour le deuxième robot, de rejoindre une file d'attente de robots attendant de franchir le deuxième seuil (942), ou la détection, par le deuxième robot (18), d'un obstacle dans le deuxième seuil avec une caméra (24a, 24b), un détecteur laser, ou un détecteur radar, ou une combinaison de ceux-ci.

5. Le procédé de l'une quelconque des revendications précédentes, dans lequel chacune des zones est une aire sécurisée, une aire à température contrôlée, une aire d'entrepôt (10), ou une aire située à une hauteur différente de celle d'une aire adjacente, ou une combinaison de celles-ci.

6. Un système pour faire naviguer un robot autonome (18) d'une première zone (901) à une deuxième zone adjacente (903) au sein d'un environnement dans une première direction et pour faire naviguer un deuxième robot autonome de la deuxième zone à la première zone dans une deuxième direction opposée à la première direction, comprenant :
un serveur (14, 15) configuré pour définir la première zone (901) et la deuxième zone (903) au sein de l'environnement, un premier seuil (942) le long d'une limite entre les première et deuxième zones, et un premier point de cheminement associé au premier seuil et une orientation associée au premier point de cheminement, associés au premier seuil ; dans lequel le serveur est configuré pour définir un deuxième seuil le long de la limite entre les première et deuxième zones, et un deuxième point de cheminement associé au deuxième seuil et une orientation associée au deuxième point de cheminement, associés au deuxième seuil ;
le premier robot autonome (18) en communication avec le serveur (14, 15), le premier robot incluant un processeur (620) et une mémoire (630), la mémoire stockant des instructions qui, lorsqu'elles sont exécutées par le processeur, amènent le robot à :
déterminer un premier itinéraire de la première zone (901) à la deuxième zone (903) franchissant le premier seuil (942), le premier itinéraire incluant le premier point de cheminement et l'orientation associée au premier point de cheminement ; et
faire naviguer le premier robot (18) le long du premier itinéraire de la première zone à la deuxième zone, le passage par le premier point de cheminement en conjonction avec le franchissement du premier seuil étant inclus et la mémoire stockant en outre des instructions qui, lorsqu'elles sont exécutées par le processeur (620), amènent le premier robot autonome (18) à déterminer un premier segment d'itinéraire jusqu'au premier point de cheminement, de telle sorte que le premier robot (18) atteigne le premier point de cheminement et s'oriente selon l'orientation associée au premier point de cheminement
le deuxième robot autonome en communication avec le serveur, le deuxième robot incluant un processeur et une mémoire, la mémoire stockant des instructions qui, lorsqu'elles sont exécutées par le processeur, amènent le deuxième robot à :
déterminer un deuxième itinéraire de la deuxième zone à la première zone franchissant le deuxième seuil, le deuxième itinéraire incluant le deuxième point de cheminement ; et
faire naviguer le deuxième robot le long du deuxième itinéraire de la deuxième zone à la première zone, incluant le passage par le deuxième point de cheminement en conjonction avec le franchissement du deuxième seuil ;
dans lequel le deuxième point de cheminement est défini par un deuxième point de cheminement et la mémoire stocke en outre des instructions qui, lorsqu'elles sont exécutées par le processeur, amènent le deuxième robot autonome à déterminer un deuxième segment d'itinéraire jusqu'au deuxième point de cheminement ;
dans lequel la limite (914) entre les deux zones adjacentes est une barrière physique et les premier et deuxième seuils sont situés au niveau d'une ouverture dans la barrière physique.

7. Le système de la revendication 6, dans lequel la mémoire (630) stocke en outre des instructions qui, lorsqu'elles sont exécutées par le processeur (620), amènent le premier robot (18) à passer par le premier point de cheminement sans marquer de pause au premier point de cheminement ou à marquer une pause au premier point de cheminement avant de franchir le premier seuil (942) et dans lequel le deuxième point de cheminement est situé à une certaine distance du deuxième seuil ou sur la limite le long du deuxième seuil.

8. Le système de l'une ou l'autre des revendications 6 ou 7, dans lequel la position du premier point de cheminement est située à une certaine distance du premier seuil (942) ou sur la limite le long du premier seuil (942), ou dans lequel le serveur (14, 15) est configuré pour définir un deuxième point de cheminement et une deuxième orientation associée au deuxième point de cheminement, associés au seuil (942), le premier point de cheminement et le deuxième point de cheminement étant situés sur des côtés opposés du premier seuil.

9. Le système de l'une quelconque des revendications 6 à 8, dans lequel la mémoire (630) stocke en outre des instructions qui, lorsqu'elles sont exécutées par le processeur, amènent le premier robot autonome (18) à rejoindre une file d'attente de robots attendant de franchir le premier seuil (942), ou amènent le premier robot autonome à détecter un obstacle dans le premier seuil avec une caméra (24a, 24b), un détecteur laser, ou un détecteur radar, ou une combinaison de ceux-ci ; et dans lequel la mémoire stocke en outre des instructions qui, lorsqu'elles sont exécutées par le processeur, amènent le deuxième robot autonome à rejoindre une file d'attente de robots attendant de franchir le deuxième seuil, ou amènent le deuxième robot autonome à détecter un obstacle dans le deuxième seuil avec une caméra (24a, 24b), un détecteur laser, ou un détecteur radar, ou une combinaison de ceux-ci.

10. Le système de l'une quelconque des revendications 6 à 9, dans lequel chacune des zones est une aire sécurisée, une aire à température contrôlée, une aire d'entrepôt (10), ou une aire située à une hauteur différente de celle d'une aire adjacente, ou une combinaison de celles-ci.

11. Le système de l'une quelconque des revendications 6 à 10, dans lequel le serveur (14, 15) comprend en outre un ou plusieurs éléments parmi un système de gestion d'entrepôt, un serveur de commandes (14), un serveur autonome, un système distribué comprenant la mémoire (630) d'au moins deux robots de la pluralité de robots (18, 18'), ou des combinaisons de ceux-ci.
